# EUROPÄISCHE PATENTANMELDUNG

(11) **EP 3 401 697 A1**
(43) Veröffentlichungstag der Anmeldung: **14.11.2018**
(21) Anmeldenummer: 18170559.1
(22) Anmeldetag: 03.05.2018
(51) Int. Cl.: G01S 5/02, G01S 3/14

(54) **HOCHGENAUE POSITIONSBESTIMMUNG FÜR FAHRZEUGE**

(30) Priorität: 12.05.2017 DE 102017208061
(71) Anmelder: Siemens Aktiengesellschaft, 80333 München (DE)
(72) Erfinder: Kasslatter, Fritz, 3003 Gablitz (AT); Ritter, Thomas, 1080 Wien (AT); Wunder, Roland, 86343 Königsbrunn (DE)
(74) Vertreter: Maier, Daniel Oliver

(57) **Zusammenfassung**

Hochgenaue Positionsbestimmung für Fahrzeuge.

Die Erfindung betrifft ein Verfahren zur hochgenauen Positionsbestimmung für Fahrzeuge, wobei die Fahrzeuge über Mittel zur drahtlosen Kommunikation mit intelligenten Infrastruktureinrichtungen verfügen, die genaue Position der intelligenten Infrastruktureinrichtung (RSU) bekannt ist und die Fahrzeuge in vorgegebenen Zeitabständen mit den intelligenten Infrastruktureinrichtungen (RSU) Statusinformationen austauschen und wobei die intelligenten Infrastruktureinrichtungen (RSU) Mittel zur Bestimmung der Richtung der empfangenen, die Statusinformation tragenden Signale (d1, d2) aufweisen, bei dem
- die von den Fahrzeugen an die intelligenten Infrastruktureinrichtungen (RSU) gesendeten Statusinformationen zumindest die Fahrzeugkennung (Iᵥ₁) und Informationen über die Geschwindigkeit (Vᵥ₁) sowie die Richtung des Fahrzeuges (Hᵥ₁) umfassen, und
- bei dem aus aufeinanderfolgenden Statusinformationen, den dazu bekannten Zeitabständen, der Richtung der die Statusinformationen tragenden Signale (d1, d2) und der Position (Latᵥ₁, Lonᵥ₁) der intelligenten Infrastruktureinrichtungen (RSU)mittels trigonometrischer Verfahren die Position der Fahrzeuge bestimmt wird.

## Beschreibung

Die Vernetzung intelligenter Verkehrssysteme leistet heute schon einen wesentlichen Beitrag, Verkehr sicherer, effizienter und nachhaltiger zu gestalten. Die Möglichkeiten dieser kooperativen Systeme, auch C-ITS (cooperative intelligent transportation system technology)genannt, wachsen stetig und werden wesentlich dazu beitragen, automatisiertes Fahren und damit einen Technologiesprung unseres Mobilitätssystem zu ermöglichen.

Eine wesentliche Voraussetzung dafür ist eine hochgenaue Positionsbestimmung der Teilnehmer.

Herkömmliche Navigationssysteme wie die Satellitennavigationssysteme NAVSTAR, GLONASS oder in Zukunft GALILEO mit einer Genauigkeit von einigen Metern erfüllen diese Anforderungen nicht.

Zur Erhöhung der Genauigkeit der Positionsbestimmung sind Satellitenreferenzdienste wie das Deutsche SAPOS-System bekannt, bei denen über ein Netz von Referenzstationen die globalen Navigationssatellitensysteme rund um die Uhr beobachtet und aus den Beobachtungen entsprechende Korrekturdaten berechnet werden. Diese werden den Anwendern dann beispielsweise per Mobilfunk zur Verfügung gestellt. Dadurch werden präzise Messungen mit einer Genauigkeit von 1-2 cm möglich.

Der Einsatz von Satellitennavigationssystemen ist allerdings an den Empfang der Signale von mindestens 4 Satelliten gebunden. Beispielsweise in Tunnels wird daher die sogenannte Koppelnavigation (dead reckoning) verwendet, bei der die Ortsbestimmung näherungsweise auf Basis der mittels Sensoren bestimmten Bewegungscharakteristika, wie insbesondere der Geschwindigkeit des Fahrzeuges, erfolgt.

Den Anforderungen einer hochgenauen Positionsbestimmung genügt diese Methode nicht.

Der Erfindung liegt daher die Aufgabe zugrunde, eine Methode zur hochgenauen Positionsbestimmung anzugeben, welche auch in Bereichen ohne Satellitennavigation zuverlässige Ergebnisse liefert.

Erfindungsgemäß geschieht dies mit einem Verfahren gemäß Anspruch 1.

Vorteilhafte Ausgestaltungen ergeben sich aus den Unteransprüchen.

Die Erfindung wird anhand von Figuren näher erläutert.
Es zeigen:
Fig. 1 schematisch eine erste Ausführungsform des erfindungsgemäßen Verfahrens, sowie
Fig. 2 schematisch eine zweite Ausführungsform des erfindungsgemäßen Verfahrens, und
Fig. 3 schematisch eine dritte Ausführungsform des erfindungsgemäßen Verfahrens.

Das erfindungsgemäße Verfahren zur hochgenauen Positionsbestimmung ist für Fahrzeuge vorgesehen, welche über Mittel zur drahtlosen Kommunikation mit intelligenten Infrastruktureinrichtungen verfügen. Bei dieser sogenannten car-toinfrastructure (Car-to-X)- Kommunikation werden Informationen über den Straßenzustand, den Verkehrsfluss, über Staus, mögliche Gefahren wie Unfälle, entgegenkommende Fahrzeuge oder stehengebliebene Fahrzeuge ausgetauscht.

Für derartige, teilweise sicherheitsrelevante Informationen ist die Kommunikation der Fahrzeuge über Mobilfunk aufgrund der begrenzten Verfügbarkeit nur eingeschränkt tauglich.

Daher wurde mit IEEE-WAVE / ITS-G5 ein Standard erstellt, mittels welchem die WLAN-Technik in Personen-Kraftfahrzeugen etabliert und eine zuverlässige Schnittstelle für Anwendungen intelligenter Verkehrssysteme geschaffen werden soll.

Erfindungsgemäß wird nun die auf Basis des Standards IEEE-WAVE / ITS-G5 erfolgte Kommunikation zwischen einem Fahrzeug und intelligenten Infrastruktureinrichtungen - sogenannten Road Side Units RSU - zur hochgenauen Positionsbestimmung herangezogen.

Dazu werden von dem Fahrzeug an die Road Side Units RSU in regelmäßigen Zeitabständen t1, t2, typisch etwa alle 100 msec, Statusinformationen gesendet, die neben einer eindeutigen Fahrzeugkennung Iᵥ₁ zumindest auch Informationen über die Geschwindigkeit V_{V1} sowie die Richtung des Fahrzeuges H_{V1} umfassen.

Auf Basis der Geschwindigkeit und des bekannten Zeitabstandes zwischen zwei Statusinformationen wird die in dem Zeitabstand zurückgelegte Wegstrecke d_{V1(t2-t1)} ermittelt.

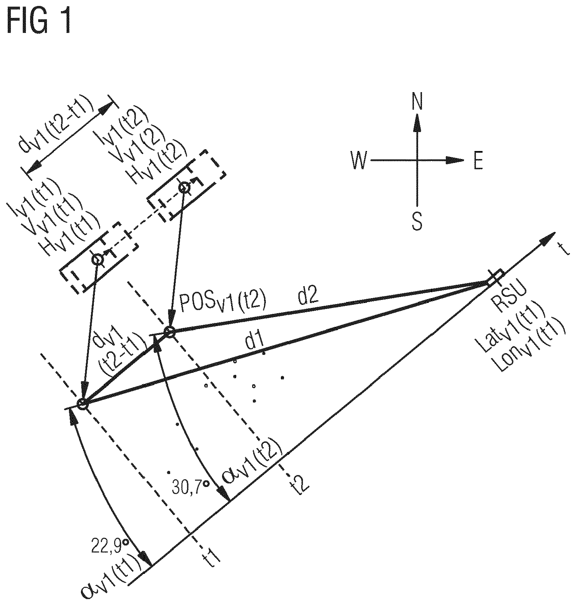

Weiterhin wird in der betreffenden Road Side Units RSU die Richtung der empfangenen, die Statusinformation tragenden Signale d1, d2 ermittelt. Wie in Fig. 1 dargestellt, bilden die Signale mit der zurückgelegten Wegstrecke d_{V1(t2-t1)} ein schiefwinkeliges Dreieck, wobei Seitenlänge und Richtung der Basis (der zurückgelegten Wegstrecke), sowie die Winkel α_{V1(t1,t2)} der Schenkel (der aufeinanderfolgenden Signale) bekannt sind.

Aus diesen Informationen kann mit trigonometrischen Verfahren die Position des Fahrzeuges Posᵥ₁₍ₜ₂₎ relativ zu der Road Side Unit RSU bestimmt, und da die absolute Position Lat_{V1}, Lon_{V1} derselben bekannt ist, daraus auch die absolute Position des Fahrzeuges ermittelt werden.

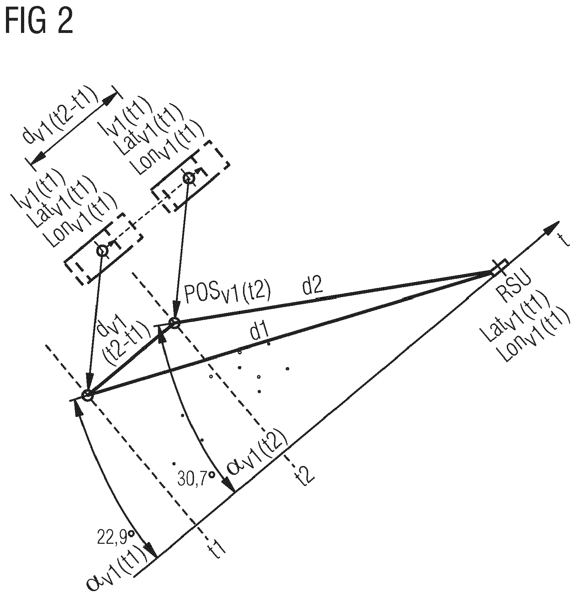

Die Richtung H_{V1} der zurückgelegten Wegstrecke d_{V1(t2-t1)} kann beispielsweise im Fahrzeug mittels Kompass oder aber auch durch Auswertung von Daten eines Satellitennavigationssystemes Lat_{V1}, Lon_{V1} erfolgen, wie dies in Fig.2 schematisch dargestellt ist. Voraussetzung dafür ist naturgemäß, dass diese Daten empfangen werden können.

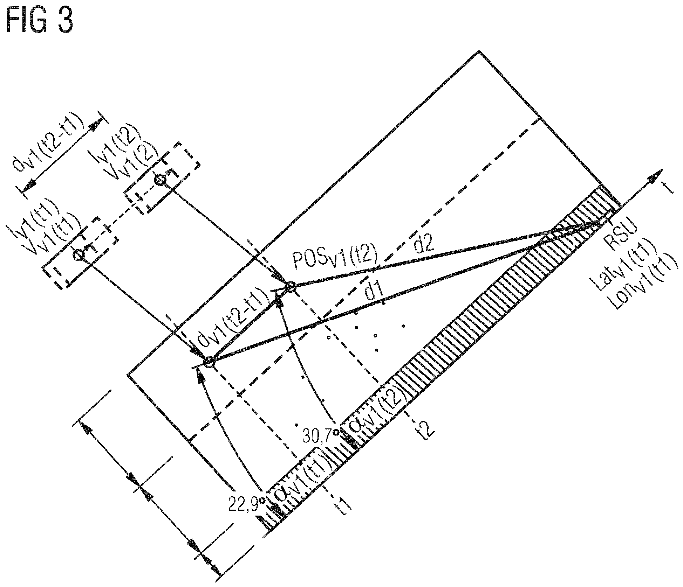

Wie in Fig. 3 schematisch dargestellt können auch Daten aus einer digitalen Straßenkarte bei der Positionsbestimmung berücksichtigt werden.

## Patentansprüche

1. Verfahren zur hochgenauen Positionsbestimmung für Fahrzeuge, wobei die Fahrzeuge über Mittel zur drahtlosen Kommunikation mit intelligenten Infrastruktureinrichtungen verfügen, die genaue Position der intelligenten Infrastruktureinrichtung bekannt ist und die Fahrzeuge in vorgegebenen Zeitabständen mit den intelligenten Infrastruktureinrichtungen Statusinformationen austauschen und wobei die intelligenten Infrastruktureinrichtungen Mittel zur Bestimmung der Richtung der empfangenen, die Statusinformation tragenden Signale aufweisen,
**dadurch gekennzeichnet, dass**
- die von den Fahrzeugen an die intelligenten Infrastruktureinrichtungen (RSU) gesendeten Statusinformationen zumindest die Fahrzeugkennung (Iᵥ₁) und Informationen über die Geschwindigkeit (V_{V1}) sowie die Richtung des Fahrzeuges (H_{V1})umfassen,
- dass aus aufeinanderfolgenden Statusinformationen, den dazu bekannten Zeitabständen, der Richtung der die Statusinformationen tragenden Signale (d1, d2) und der Position der intelligenten Infrastruktureinrichtungen mittels trigonometrischer Verfahren die Position der Fahrzeuge bestimmt wird.

2. Verfahren nach Anspruch 1, **dadurch gekennzeichnet, dass**
- aus zumindest zwei übersandten Statusinformationen die vom Fahrzeug in dem Zeitabstand zurückgelegte Wegstrecke (d_{V1(t2-t1)}) ermittelt wird,
- dass die Richtung der die Statusinformationen tragenden aufeinanderfolgenden Signale (d1, d2) bestimmt wird,
- dass aus den Richtungen der aufeinanderfolgenden Signale, und der zurückgelegten Wegstrecke (d_{V1(t2-t1)}) mittels trigonometrischer Verfahren eine relative Position der Fahrzeuge (Posᵥ₁) zu den intelligenten Infrastruktureinrichtungen (RSU) ermittelt wird, und
- dass aus der absoluten Position (Lat_{V1}, Lon_{V1})der intelligenten Infrastruktureinrichtungen und der relativen Position (Posᵥ₁₍ₜ₂₎) der Fahrzeuge eine absolute Position der Fahrzeuge ermittelt wird.

3. Verfahren nach Anspruch 1 oder 2, **dadurch gekennzeichnet, dass** von den Fahrzeugen als zusätzliche Statusinformationen mittels Satellitennavigation bestimmte Positionsdaten (Lat_{V1}, Lon_{V1}) übersandt werden und dass aus zumindest zwei übersandten, mittels Satellitennavigation bestimmte Positionsdaten, die vom Fahrzeug in dem Zeitabstand zurückgelegte Wegstrecke (d_{V1(t2-t1)}) ermittelt wird.

4. Verfahren nach einem der Ansprüche 1 bis 3, **dadurch gekennzeichnet, dass** Daten aus einer digitalen Straßenkarte bei der Positionsbestimmung berücksichtigt werden.
